(19)

Europäisches Patentamt

European Patent Office

Office européen des brevets

(11) **EP 3 816 114 B1**

(12) **EUROPEAN PATENT SPECIFICATION**

(45) Date of publication and mention of the grant of the patent:
**26.02.2025 Bulletin 2025/09**

(21) Application number: **19825653.9**

(22) Date of filing: **22.03.2019**

(51) International Patent Classification (IPC):
**C02F 1/461** *(2023.01)* **C02F 1/68** *(2023.01)*
**C02F 1/00** *(2023.01)*

(52) Cooperative Patent Classification (CPC):
**C02F 1/4618; C02F 1/687;** C02F 1/001;
C02F 2001/4619; C02F 2201/46115;
C02F 2201/4617; C02F 2201/4618;
C02F 2201/46185; C02F 2209/42

(86) International application number:
**PCT/JP2019/012016**

(87) International publication number:
**WO 2020/003654 (02.01.2020 Gazette 2020/01)**

(54) **ELECTROLYTIC ION WATER GENERATION METHOD, AND ELECTROLYTIC ION WATER GENERATION APPARATUS**

VERFAHREN UND VORRICHTUNG ZUR ELEKTROLYTISCHEN IONENWASSERERZEUGUNG

PROCÉDÉ ET APPAREIL DE GÉNÉRATION D'EAU IONIQUE ÉLECTROLYTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.06.2018 JP 2018120818**

(43) Date of publication of application:
**05.05.2021 Bulletin 2021/18**

(73) Proprietor: **Kabushiki Kaisha E-Plan
Funabashi-shi, Chiba, 273-0014 (JP)**

(72) Inventor: **MATSUZAWA, Tamio
Funabashi-shi, Chiba 273-0014 (JP)**

(74) Representative: **Marks & Clerk LLP
15 Fetter Lane
London EC4A 1BW (GB)**

(56) References cited:
WO-A1-2016/016954      JP-A- 2012 040 489
JP-A- H07 299 459       JP-A- H08 117 754
JP-A- H1 076 268        JP-A- H10 192 854
JP-B2- 4 115 886        JP-U- 3 122 342
JP-U- 3 177 645         JP-U- 3 180 147
KR-A- 20030 077 910     US-A1- 2013 277 211
US-A1- 2017 247 267

EP 3 816 114 B1

**Description**

Technical Field

The present invention relates to a generation method and a generation apparatus for electrolytic ion water (also called alkaline ion water or alkaline electrolyzed water).

Background Art

There has hitherto been known an electrolytic ion water generation apparatus including: a generation tank configured to store raw water; an electrolytic solution tank configured to store an electrolytic solution; an electrolytic bath in which ion exchange is to be carried out; and a DC power source configured to apply a voltage between electrodes of the electrolytic bath (Patent Literatures 1 and 2). The electrolytic bath includes: an ion exchange membrane; and a cathode chamber and an anode chamber partitioned by the ion exchange membrane. A cathode plate including a cathode-side terminal is provided in the cathode chamber, and an anode plate including an anode-side terminal is provided in the anode chamber. A minus side of the DC power source is connected to the cathode-side terminal, and a plus side of the DC power source is connected to the anode-side terminal, thereby being capable of applying a DC voltage between the electrodes.
In the electrolytic ion water generation apparatus, when the DC voltage is applied between the terminals by the DC power source, electrolysis occurs. A cation generated due to the electrolysis in the anode chamber passes through the ion exchange membrane to be reduced with the raw water in the cathode chamber, thereby generating electrolytic ion water.

Citation List

Patent Literature

[PTL 1] JP2012-40489 A
[PTL 2] WO 2016/016954 A KR2003/0077910 , US 2017/247267 A1 and JP4115886B2 propose electrolytic ion water generation methods.

Summary of Invention

Technical Problem

The electrolytic solution to be used for generating electrolytic ion water contains potassium carbonate as an ionic substance. The potassium carbonate has a specific weight larger than that of water being a solvent and thus is more liable to settle on a bottom side of the electrolytic solution tank. When the potassium carbonate settles on the bottom side of the electrolytic solution tank, the concentration of the electrolytic solution varies. As a result, there is a disadvantage in that electrolytic ion water having a desired pH value cannot be stably generated.
The present invention has been made in view of the above-mentioned circumstance and has an object to provide an electrolytic ion water generation method and an electrolytic ion water generation apparatus, which are capable of eliminating settlement of potassium carbonate in an electrolytic solution tank and thereby preventing the above-mentioned disadvantage caused by the settlement of potassium carbonate.

Solution to Problem

[Electrolytic Ion Water Generation Method]

In one aspect of the present invention, there is provided an electrolytic ion water generation method in accordance with claim 1.

[Electrolytic Ion Water Generation Apparatus]

According to another aspect of the present invention, there is provided an electrolytic ion water generation apparatus in accordance with claim 2.

Advantageous Effects of Invention

[Electrolytic ion water generation method]

In the electrolytic ion water generation method according to the present invention, the electrolytic solution in the electrolytic solution tank is stirred. Therefore, the settlement of potassium carbonate in the electrolytic solution tank is eliminated, thereby being capable of preventing the disadvantage caused by the settlement of potassium carbonate.

[Electrolytic ion water generation apparatus]

The electrolytic ion water generation apparatus according to the present invention includes the stirring means for stirring an electrolytic solution in the electrolytic solution tank, and the electrolytic solution in the electrolytic solution tank can be stirred with the stirring means. Therefore, the settlement of potassium carbonate in the electrolytic solution tank is eliminated, thereby being capable of preventing the disadvantage caused by the settlement of potassium carbonate.

Brief Description of Drawings

FIG. 1 is an explanatory diagram for illustrating an electrolytic ion water generation method and an electrolytic ion water generation apparatus.
FIG. 2 is an explanatory diagram for illustrating an electrolytic ion water generation method and an electrolytic ion water generation apparatus.
FIG. 3 is an explanatory diagram for illustrating an electrolytic ion water generation method and an electrolytic ion water generation apparatus.
FIG. 4 is an explanatory diagram for illustrating an electrolytic ion water generation method and an electrolytic ion water generation.
FIG. 5(a) is an explanatory view for illustrating an example of productization of the electrolytic ion water generation apparatus according to the present invention, and FIG. 5(b) is an explanatory view for illustrating a positional relationship between a receiving container and a water surface of an electrolytic solution in an electrolytic solution tank of FIG. 5(a).

Detailed Description

(Electrolytic ion water generation apparatus)

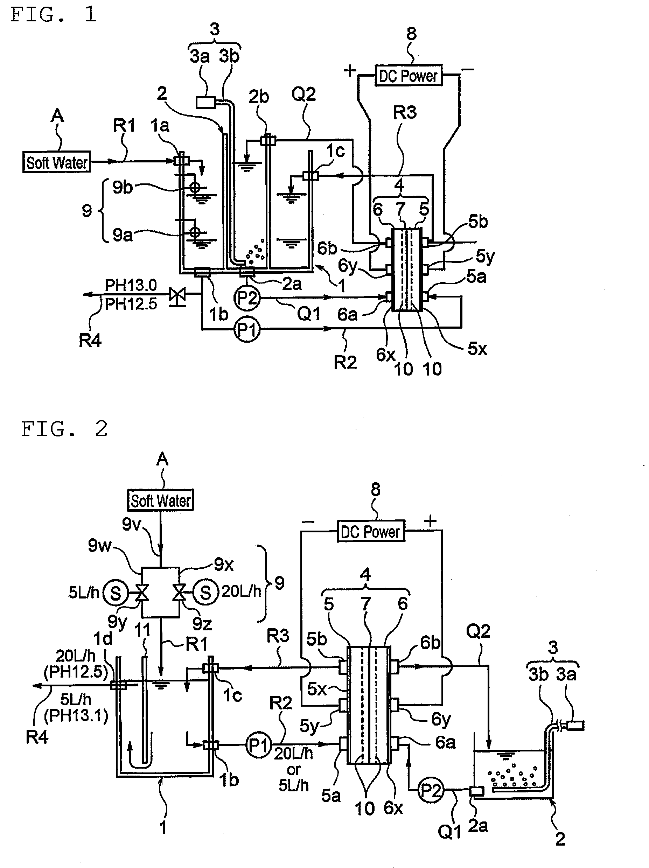

An electrolytic ion water generation apparatus is described with reference to FIG. 1. The electrolytic ion water generation apparatus is a so-called flow type generation apparatus. In FIG. 1, a generation tank configured to store raw water supplied from a raw water supply source A is denoted by reference symbol 1. An electrolytic solution tank configured to store an electrolytic solution (electrolyte water solution) containing an ionic substance dissolved in a solvent is denoted by reference symbol 2. Stirring means for stirring the electrolytic solution in the electrolytic solution tank 2 is denoted by reference symbol 3. An electrolytic bath configured to generate electrolytic ion water through electrolysis is denoted by reference symbol 4. A cathode chamber configured to allow the raw water to pass therethrough is denoted by reference symbol 5. An anode chamber configured to allow the electrolytic solution to pass therethrough is denoted by reference symbol 6. An ion exchange membrane configured to allow a cation generated due to the electrolysis in the anode chamber 6 to pass therethrough toward the cathode chamber 5 side is denoted by reference symbol 7. A DC power source is denoted by reference symbol 8. The term "stir" as used in this application means an act of causing potassium carbonate in the electrolytic solution to be dispersed in the electrolytic solution (solvent) to eliminate variation in concentration of the electrolytic solution by any means.

The generation tank 1 illustrated in FIG. 1 as an example is a bottomed cylindrical container. A peripheral wall of the generation tank 1 has a raw water supply port 1a configured to take the raw water, which is supplied from the raw water supply source A, into the generation tank 1. Another end side of a raw water supply path R1 having one end side connected to the raw water supply source A is connected to the raw water supply port 1a so that the raw water, which is supplied from the raw water supply source A, is taken into the generation tank 1 through the raw water supply path R1. Examples of the raw water to be used include pure water, tap water, and groundwater.

A bottom surface of the generation tank 1 has a discharge port 1b configured to discharge the raw water in the generation tank 1 to an outside. Another end side of a raw water path R2 having one end side connected to an inlet port 5a of the cathode chamber 5 is connected to the discharge port 1b. A raw water circulation pump P1 is connected to the raw water path R2 so that power of the raw water circulation pump P1 causes the raw water in the generation tank 1 to be supplied to the cathode chamber 5.

The peripheral wall of the generation tank 1 has a take-in port 1c configured to take electrolytic ion water, which is generated as a result of passage through the cathode chamber 5, into the generation tank 1. A feedback flow passage R3 connected to an outlet port 5b of the cathode chamber 5 is connected to the take-in port 1c. The electrolytic ion water generated as a result of passage through the cathode chamber 5 is taken into the generation tank 1 through the feedback flow passage R3. The raw water path R2, the raw water circulation pump P1, and the feedback flow passage R3 form raw water circulating means.

Raw water amount control means 9 for controlling a raw water amount is provided in the generation tank 1. As the raw water amount control means 9, two float switches (float switch 9a in a lower stage and float switch 9b in an upper stage) provided apart from each other in an up-and-down direction are used. Respective water levels of the float switches 9a and 9b can suitably be set in accordance with the raw water amount required for generating electrolytic ion water having a desired pH value. As an example, the float switch 9a in the lower stage is set to a water level corresponding to a raw water amount required for generating electrolytic ion water having pH 13.1, and the float switch 9b in the upper stage is set to a water level corresponding to a raw water amount required for generating electrolytic ion water having pH 12.5.

In the case of generating the electrolytic ion water having pH 12.5, only the float switch 9b in the upper stage operates, and the float switch 9a in the lower stage does not operate. When the raw water in the generation tank 1 reaches the float switch 9b in the upper stage, the supply of raw water to the generation tank 1 is automatically stopped. In the case of generating the electrolytic ion water having pH 13.1, the float switch 9a in the lower stage operates. When the raw water in the generation tank 1 reaches the float switch 9a in the lower stage, the supply of raw water to the generation tank 1 is automatically stopped.

The electrolytic solution tank 2 illustrated in FIG. 1 as an example is a bottomed cylindrical container having a diameter smaller than that of the generation tank 1 and is arranged coaxially with the generation tank 1 on an inner side of the generation tank 1. A bottom surface of the electrolytic solution tank 2 has an electrolytic solution discharge port 2a configured to discharge the electrolytic water solution in the electrolytic solution tank 2 to the outside. An electrolytic solution flow passage Q1 connected to an inlet port 6a of the anode chamber 6 of the electrolytic bath 4 is connected to the electrolytic solution discharge port 2a. An electrolytic solution circulation pump P2 is connected to the electrolytic solution flow passage Q1 so that power of the electrolytic solution circulation pump P2 causes the electrolytic solution in the electrolytic solution tank 2 to be supplied to the anode chamber 6 of the electrolytic bath 4.

A peripheral wall of the electrolytic solution tank 2 has an electrolytic solution feedback port 2b configured to return the electrolytic solution, which has passed through the anode chamber 6, to the electrolytic solution tank 2. Another end side of the electrolytic solution feedback flow passage Q2 having one end side connected to an outlet port 6b of the anode chamber 6 is connected to the electrolytic solution feedback port 2b. The electrolytic solution having passed through the anode chamber 6 is fed back to the electrolytic solution tank 2 through the electrolytic solution feedback flow passage Q2. The electrolytic solution flow passage Q1, the electrolytic solution circulation pump P2, and the electrolytic solution feedback flow passage Q2 form electrolytic solution circulating means.

The stirring means 3 illustrated in FIG.1 as an example includes an air pump 3a and an air supply pipe 3b. The air supply pipe 3b has one end side connected to the air pump 3a and another end side led into the electrolytic solution tank 2. A distal end side (outlet port side) of the air supply pipe 3b is arranged so as to be located near the bottom surface of the electrolytic solution tank 2. When the distal end side (outlet port side) of the air supply pipe 3b is arranged so as to be located near the bottom surface of the electrolytic solution tank 2, the electrolytic solution can easily be stirred with rising air, thereby being capable of easily preventing settlement of potassium carbonate.

The electrolytic bath 4 illustrated in FIG. 1 as an example includes the cathode chamber 5 and the anode chamber 6, which are partitioned by the ion exchange membrane 7. The ion exchange membrane 7 is an exchange membrane, which has the property of allowing passage of only a cation while preventing passage of raw water and an electrolytic solution (cation exchange membrane). As the ion exchange membrane 7, there may be used an existing or novel ion exchange membrane. Examples of the existing ion exchange membrane include "Selemion" (trademark) manufactured by Asahi Glass Co., Ltd. and an exchange membrane manufactured by Du Pont Japan. Spacers 10, which are each made of an insulating material with a mesh-like form, are arranged on both outer sides of the ion exchange membrane 7, and a cathode plate 5x and an anode plate 6x are provided on outer sides of the spacers 10. For example, a net which is made of nylon and has a mesh size of 5-mm square may be used as the spacer 10.

A cathode terminal 5y is provided to the cathode plate 5x, and an anode terminal 6y is provided to the anode plate 6x. A minus side of the DC power source 8 is connected to the cathode terminal 5y, and a plus side of the DC power source 8 is connected to the anode terminal 6y, thereby being capable of applying a DC voltage from the DC power source 8.

The electrolytic bath 4 is installed to be directed in a direction of allowing air to easily exit, in other words, a direction of allowing air bubbles to rise (the vertical direction) so that air does not accumulate on surfaces of the cathode plate 5x and the anode plate 6x forming a part of the electrolytic bath 4. When the electrolytic bath 4 is installed to be directed in such a direction, hydrogen or carbon dioxide generated at the time of the electrolysis rises upward, thereby preventing formation of an air layer on the surfaces of the cathode plate 5x and the anode plate 6x. As a result, a negative influence caused by the formation of the air layer on the surfaces of the cathode plate 5x and the anode plate 6x, specifically, a negative influence that the electrolysis is hindered due to a lack of current flow does not occur. When the cathode plate 5x and the anode plate 6x are installed to be directed in the vertical direction (in lengthways), potassium carbonate settles on the lower side of the anode plate 6x. As a result, a disadvantage in that the electrolysis is not efficiently carried out on the upper side with respect to the portion at which the potassium carbonate settles is liable to occur. In this application, the electrolytic solution in the electrolytic solution tank 2 is stirred with the stirring means 3, thereby preventing such a disadvantage.

In the electrolytic ion water generation apparatus, the raw water in the generation tank 1 circulates through the raw water path R2, the cathode chamber 5, the feedback flow passage R3, and the generation tank 1 in the stated order, and the electrolytic solution in the electrolytic solution tank 2 circulates through the electrolytic solution flow passage Q1, the anode chamber 6, the electrolytic solution feedback flow passage Q2, and the electrolytic solution tank 2 in the stated order. At the time of the circulation of the raw water and the electrolytic solution, when a DC voltage is applied between the electrode plates (the cathode plate 5x and the anode plate 6x), the electrolytic solution is subjected to electrolysis. A cation generated in the electrolytic solution tank 2 due to the electrolysis passes through the ion exchange membrane 7 to be reduced with the raw water in the generation tank 1, thereby generating electrolytic ion water. In the electrolytic ion water generation apparatus, the electrolytic solution in the electrolytic solution tank 2 is stirred with the stirring means 3, and the electrolytic solution in which the variation in concentration is eliminated circulates. Therefore, the electrolysis is carried out on the entire surfaces of the electrode plates (the cathode plate 5x and the anode plate 6x), thereby being capable of efficiently and stably generating electrolytic ion water.

(Electrolytic ion water generation apparatus)

A further electrolytic ion water generation apparatus is described with reference to FIG. 2. This electrolytic ion water generation apparatus is also a flow type generation apparatus. A basic configuration is the same as that described above with reference to FIG. 1. There are differences in that the generation tank 1 and the electrolytic solution tank 2 are separately provided and in that the raw water amount control means 9 for controlling the raw water amount supplied to the generation tank 1 is provided between the raw water supply source A and the generation tank 1. In the following, description of the features which are in common with the apparatus described with reference to FIG. 1 is suitably omitted, and other features are mainly described.

In addition to the discharge port 1b configured to discharge the raw water to the outside and the take-in port 1c configured to take electrolytic ion water into the generation tank 1, the generation tank 1 further has a take-out port 1d configured to take out generated electrolytic ion water having a desired pH to the outside. A take-out flow passage R4 configured to send out the electrolytic ion water having the desired pH to the outside is connected to the take-out port 1d. A partition plate 11 is provided in the generation tank 1. A lower end of the partition plate 11 is arranged so as not to reach the bottom surface of the generation tank 1.

The raw water amount control means 9 includes a first main flow passage 9v, a first branch passage 9w, a second branch passage 9x, a first electromagnetic valve 9y, second electromagnetic valve 9z, and a raw water supply path R1. The first main flow passage 9v is connected to the raw water supply source A. The first branch passage 9w and the second branch passage 9x are connected to the first main flow passage 9v. The first electromagnetic valve 9y is provided to the first branch passage 9w. The second electromagnetic valve 9z is provided to the second branch passage 9x. The first branch passage 9w and the second branch passage 9x merge into the raw water supply path R1. The first branch passage 9w and the second branch passage 9x have different supply amounts per unit time. As an example, the first branch passage 9w is capable of supplying 5 L of raw water per unit time (the amount required for generating electrolytic ion water having pH 13.1), and the second branch passage 9x is capable of supplying 20 L of raw water per unit time (the amount required for generating electrolytic ion water having pH 12.5). The first branch passage 9w is electrically opened and closed by the first electromagnetic valve 9y, and the second branch passage 9x is electrically opened and closed by the second electromagnetic valve 9z.

(Electrolytic ion water generation apparatus)

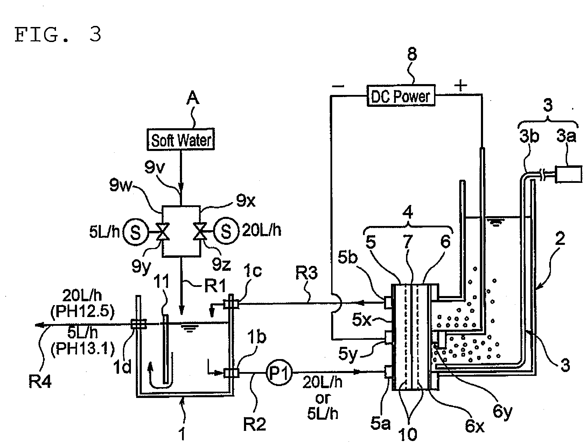

A still further electrolytic ion water generation apparatus is described with reference to FIG. 3. Similarly to the apparatus described above with reference to FIGs. 1 and 2, the electrolytic ion water generation apparatus is also a flow type generation apparatus. A basic configuration of this apparatus is the same as that of FIG. 2 described above. There is a difference in that the electrolytic bath 4 is coupled to an opening portion on a lower side of the electrolytic solution tank 2 to form a unit. In the following, description of the features which are in common with those described with reference to FIGs 1 and 2 is suitably omitted, and other features are mainly described.

The electrolytic solution tank 2 is a cylindrical container having opening portions on upper and lower sides. The electrolytic bath 4 is connected to the lower opening portion of the electrolytic solution tank 2 to form a unit. The electrolytic solution in the electrolytic solution tank 2 is caused to flow into the anode chamber 6. The electrolytic solution tank 2 does not include the electrolytic solution circulating means that is provided in the apparatus described with reference to FIGs 1 and 2.

(Electrolytic ion water generation apparatus)

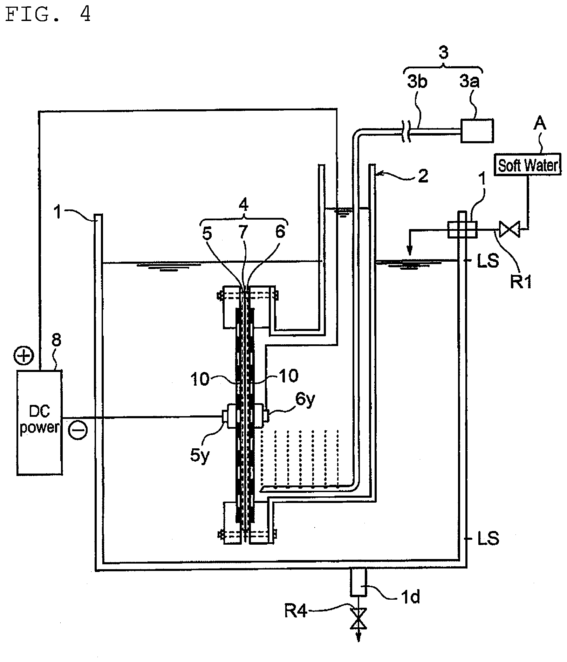

An electrolytic ion water generation apparatus is described with reference to FIG. 4. The electrolytic ion water generation apparatus is a so-called storage type generation apparatus. A basic configuration of this apparatus is the same as that described with reference to FIG. 3. There is a difference in that the electrolytic solution tank 2 and the electrolytic bath 4 which are formed into a unit are provided in the generation tank 1. In the following, description of the features which are in common with the apparatus described with reference to FIG. 3 is suitably omitted, and other features are mainly described.

The electrolytic solution tank 2 and the electrolytic bath 4 which are formed into a unit are arranged in the generation tank 1. The electrolytic solution tank 2 and the electrolytic bath 4 are arranged in such a manner that the entirety of the electrolytic bath 4 is soaked in the raw water in the generation tank 1. In this case, the upper side of the electrolytic solution tank 2 protrudes beyond a liquid surface of the raw water in the generation tank 1. The electrolytic solution in the electrolytic solution tank 2 is provided in such a manner that a liquid surface of the electrolytic solution is located at a position higher than the liquid surface of the raw water in the generation tank 1.

The electrolytic ion water generation apparatus is a storage type generation apparatus, and the raw water circulating means and the electrolytic solution circulating means provided in the apparatus described with reference to FIGs 1 and 2 are not provided.

(Electrolytic ion water generation apparatus)

In the apparatus described with reference to FIGs 1 to 4 above, the case of using the air pump 3a and the air supply pipe 3b as the stirring means 3 is given as an example. However, various types of stirring means 3 other than the air pump 3a and the air supply pipe 3b may be used. For example, the stirring means 3 may be configured to stir the electrolytic solution with air, stir the electrolytic solution with a rotary force of stirring blades, or stir the electrolytic solution with a suction/discharge force given by a pump.

Although description is omitted in the description of FIGs 1 to 4 above, a filtering device configured to remove calcium or magnesium contained in tap water may be provided on an upstream side of the raw water supply path R1. Examples of the filtering device to be used include a 5 $\mu$m-mesh filter, an activated carbon filter (AC filter), and a reverse osmosis membrane (RO membrane) filter (RO filter).

The configuration of any of the the electrolytic ion water generation apparatus described above may suitably be adopted as a configuration of a further electrolytic ion water generation apparatus.

(Productization example of electrolytic ion water generation apparatus)

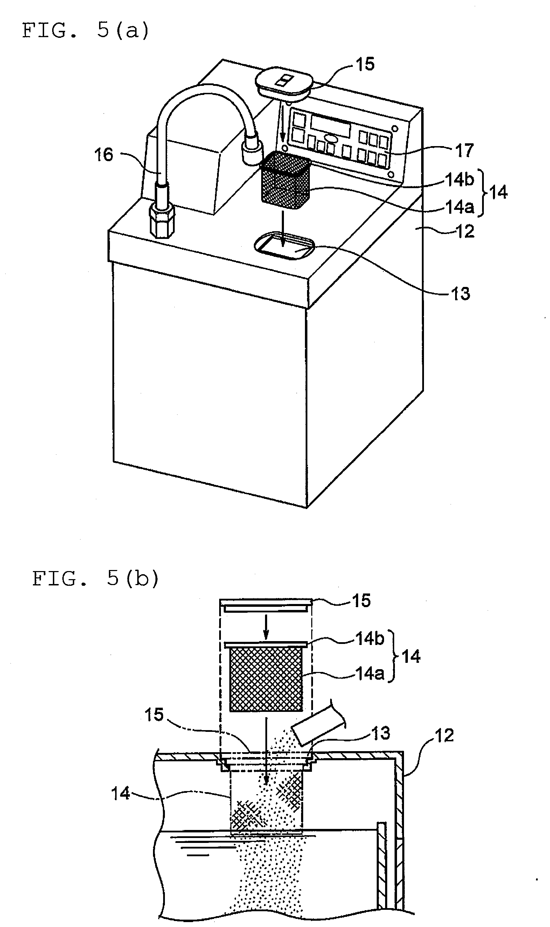

The electrolytic ion water generation apparatus according to each of the apparatus described above may be productized, for example, in the mode illustrated in FIG. 5(a) and FIG. 5(b). In FIG. 5(a) and FIG. 5(b), a casing is denoted by reference symbol 12. A charge port configured to charge potassium carbonate is denoted by reference symbol 13. A receiving container configured to receive the charged potassium carbonate is denoted by reference symbol 14. An opening/closing lid configured to open and close the charge port is denoted by reference symbol 15. A take-out passage configured to take out generated electrolytic ion water is denoted by reference symbol 16. An operation unit is denoted by reference symbol 17. Although illustration is omitted, for example, the generation tank 1, the electrolytic solution tank 2, the stirring means 3, and the electrolytic bath 4 described in each of the apparatus are built in the casing 12.

As illustrated in FIG. 5(a) and FIG. 5(b), the receiving container 14 having a cup shape is provided at the charge port 13. The receiving container 14 includes a cup-shaped portion 14a and a ring-shaped locking portion 14b. The cup-shaped portion 14a is configured to receive potassium carbonate. The ring-shaped locking portion 14b is provided at an upper edge of the cup-shaped portion 14a. The cup-shaped portion 14a is formed of a mesh member. In the example illustrated in FIG. 5(a) and FIG. 5(b), a bottom portion of the cup-shaped portion 14a is always soaked in the electrolytic solution stored in the electrolytic solution tank 2. Such arrangement has the merit in that the potassium carbonate charged into the cup-shaped portion 14a gradually dissolves in the electrolytic solution and thus is less liable to settle. The productization example illustrated in FIG. 5(a) and FIG. 5(b) is merely an example, and the electrolytic ion water generation apparatus may be productized with other configurations.

(Electrolytic ion water generation method)

An electrolytic ion water generation method is described with an example case in which an electrolytic ion water generation apparatus corresponding to the electrolytic ion water generation apparatus as described with reference to FIG. 1 is used. The raw water stored in the generation tank 1 is circulated through the raw water path R2, the cathode chamber 5, the feedback flow passage R3, and the generation tank 1 in the stated order, and the electrolytic solution in the electrolytic solution tank 2 is circulated through the electrolytic solution flow passage Q1, the anode chamber 6, the electrolytic solution feedback flow passage Q2, and the electrolytic solution tank 2 in the stated order. A voltage is applied to the cathode plate 5x and the anode plate 6x from the DC power source 8 to subject the electrolytic solution to electrolysis, and a cation generated due to the electrolysis is reduced with the raw water passing through the cathode chamber 5, thereby turning the raw water into the electrolytic ion water. The circulation of the raw water and the circulation and electrolysis of the electrolytic solution are repeatedly carried out until the raw water in the generation tank 1 has a predetermined pH value. The generated electrolytic ion water can be discharged from the take-out flow passage R4 to the outside of the generation tank 1. The electrolytic solution in the electrolytic solution tank 2 is stirred with the stirring means 3 (the variation in concentration of the electrolytic solution is eliminated), thereby being capable of efficiently generating the electrolytic ion water. It is preferred that the electrolytic solution be continuously stirred during the generation of the electrolytic ion water, more preferably, at least before the generation of the electrolytic ion water or during the generation of the electrolytic ion water.

(Electrolytic ion water generation method )

A further electrolytic ion water generation method is described with an example case in which an electrolytic ion water generation apparatus corresponding to the electrolytic ion water generation apparatus as described with reference to FIG. 2 is used. Similarly to the case in which the electrolytic ion water generation apparatus described above with reference to FIG. 1 is used, the raw water stored in the generation tank 1 is circulated through the raw water path R2, the cathode chamber 5, the feedback flow passage R3, and the generation tank 1 in the stated order, and the electrolytic solution in the electrolytic solution tank 2 is circulated through the electrolytic solution flow passage Q1, the anode chamber 6, the electrolytic solution feedback flow passage Q2, and the electrolytic solution tank 2 in the stated order. A voltage is applied to the cathode plate 5x and the anode plate 6x from the DC power source 8 to subject the electrolytic solution to electrolysis, and a cation generated due to the electrolysis is reduced with the raw water passing through the cathode chamber 5, thereby turning the raw water into the electrolytic ion water. The circulation of the raw water and the circulation and electrolysis of the electrolytic solution are repeatedly carried out until the raw water in the generation tank 1 has a predetermined pH value. The generated electrolytic ion water can be discharged from the take-out flow passage R4 to the outside of the generation tank 1. Also, the electrolytic solution in the electrolytic solution tank 2 is stirred with the stirring means 3 (the variation in concentration of the electrolytic solution is eliminated), thereby being capable of efficiently generating the electrolytic ion water. Similarly to the apparatus described with reference to FIG. 1 above, it is preferred that the electrolytic solution be continuously stirred during the generation of the electrolytic ion water, more preferably, at least before the generation of the electrolytic ion water or during the generation of the electrolytic ion water.

(Electrolytic ion water generation method)

A still further electrolytic ion water generation method is described with an example case in which an electrolytic ion water generation apparatus corresponding to the electrolytic ion water generation apparatus described with reference to FIG. 3 is used. The raw water stored in the generation tank 1 is circulated through the raw water path R2, the cathode chamber 5, the feedback flow passage R3, and the generation tank 1 in the stated order, and the electrolytic solution in the electrolytic solution tank 2 is caused to flow into the anode chamber 6. (The electrolytic solution tank 2 and the electrolytic bath 4 are formed into a unit, and hence the electrolytic solution in the electrolytic solution tank 2 always flows into the anode chamber 6.) A voltage is applied to the cathode plate 5x and the anode plate 6x from the DC power source 8 to subject the electrolytic solution to electrolysis, and a cation generated due to the electrolysis is reduced with the raw water passing through the cathode chamber 5, thereby turning the raw water into the electrolytic ion water. The circulation of the raw water and the circulation and electrolysis of the electrolytic solution are repeatedly carried out until the raw water in the generation tank 1 has a predetermined pH value. The generated electrolytic ion water can be discharged from the take-out flow passage R4 to the outside of the generation tank 1. The electrolytic solution in the electrolytic solution tank 2 is stirred with the stirring means 3 (the variation in concentration of the electrolytic solution is eliminated), thereby being capable of efficiently generating the electrolytic ion water. Similarly to another example, it is preferred that the electrolytic solution be continuously stirred during the generation of the electrolytic ion water, more preferably, at least before the generation of the electrolytic ion water or during the generation of the electrolytic ion water.

**EP 3 816 114 B1**

(Electrolytic ion water generation method)

A further electrolytic ion water generation method is described with an example case in which an electrolytic ion water generation apparatus corresponding to the electrolytic ion water generation apparatus described with reference to FIG. 4 is used. The raw water stored in the generation tank 1 is caused to flow into the cathode chamber 5, and the electrolytic solution in the electrolytic solution tank 2 is caused to flow into the anode chamber 6. (The electrolytic solution tank 2 and the electrolytic bath 4, which are formed into a unit, are arranged in the raw water in the generation tank 1, and hence the raw water in the generation tank 1 always flows into the cathode chamber 5. Moreover, the electrolytic solution tank 2 and the electrolytic bath 4 are formed into a unit, and hence the electrolytic solution in the electrolytic solution tank 2 always flows into the anode chamber 6.) A voltage is applied to the cathode plate 5x and the anode plate 6x from the DC power source 8 to subject the electrolytic solution to electrolysis, and a cation generated due to the electrolysis is reduced with the raw water passing through the cathode chamber 5, thereby turning the raw water into the electrolytic ion water. The circulation of the raw water and the circulation and electrolysis of the electrolytic solution are repeatedly carried out until the raw water in the generation tank 1 has a predetermined pH value. The generated electrolytic ion water can be discharged from the take-out flow passage R4 to the outside of the generation tank 1. Also, the electrolytic solution in the electrolytic solution tank 2 is stirred with the stirring means 3 (the variation in concentration of the electrolytic solution is eliminated), thereby being capable of efficiently generating the electrolytic ion water. Similarly to another example, it is preferred that the electrolytic solution be continuously stirred during the generation of the electrolytic ion water, more preferably, at least before the generation of the electrolytic ion water or during the generation of the electrolytic ion water.

(Electrolytic ion water generation method)

Although description is omitted in the description with reference to FIGS. 1 to 4 mentioned above, in the electrolytic ion water generation method according to the present invention, a pH value of the electrolytic ion water to be generated can be adjusted through adjustment of the raw water amount. For example, in the case in which pH 12.5 is set as a reference pH value, and the raw water amount required for generating the electrolytic ion water having the reference pH value is set as a reference raw water amount, in order to generate the electrolytic ion water having a pH value higher than the reference pH value, it is only required that the raw water of an amount less than the reference raw water amount be used. Moreover, in order to generate the electrolytic ion water having a pH value lower than the reference pH value, it is only required that the raw water of an amount more than the reference raw water amount be used. There is given a prerequisite that the conditions other than the raw water amount are the same as those given in the case of generating the electrolytic ion water having the reference pH value.

A relationship between the reference raw water amount and the raw water amount required for generating strong alkaline ion water having a pH value higher than the reference pH value can be determined based on the following expression. This expression is an expression for determining an alkali concentration based on pH, and respective numerical values of [OH⁻] (mol/L), KOH concentration (%), an alkali concentration ratio, and a storage amount or supply amount of raw water into the generation tank, which are determined based on the expression, are as shown in Table 1.

(Expression)

$$pH = 14 + \log[OH^-]$$

When the reference pH is 12.5, the following result is obtained from the expression:

$$12.5 = 14 + \log[OH^-]$$

$$[OH^-] = 10^{12.5-14}$$

$$= 0.0316 \, mol/L$$

A KOH molecular weight is 56.1 g/mol, and hence

8

$$KOH\ concentration=0.0316\ mol/L\times56.1\ g/mol$$

$$=1.772\ g/L$$

$$=0.1772\%$$

Similarly, those values were determined also in the case of pH 13.0 and pH 13.1. When pH is 13.0, the following result is obtained from the expression:

$$13.0=14+\log[OH^-]$$

$$[OH^-]=10^{13.0-14}$$

$$=0.1000\ mol/L$$

A KOH molecular weight is 56.1 g/mol, and hence

$$KOH\ concentration=0.1000\ mol/L\times56.1\ g/mol$$

$$=5.610\ g/L$$

$$=0.5610\%$$

When pH is 13.1, the following result is obtained from the expression:

$$13.1=14+\log[OH^-]$$

$$[OH^-]=10^{13.1-14}$$

$$=0.1259\ mol/L$$

A KOH molecular weight is 56.1 g/mol, and hence

$$KOH\ concentration=0.1259\ mol/L\times56.1\ g/mol$$

$$=7.063\ g/L$$

$$=0.7063\%$$

When the alkali concentration ratio at pH 12.5 is assumed to be 1, the alkali concentration ratio at pH 13.0 is $0.1000/0.0316=3.1645\approx3.16$ based on $[OH^-]=0.1000$ mol/L at pH 13.0 and $[OH^-]=0.0316$ mol/L at pH 12.5 (Table 1).

Similarly to the foregoing, the alkali concentration ratio at pH 13.1 is $0.1259/0.0316=3.9841\approx3.98$ based on $[OH^-]=0.1259$ mol at pH 13.1 and $[OH^-]=0.0316$ mol/L at pH 12.5 (Table 1).

It is assumed that the alkali concentration ratio at pH 12.5 is 1, and the amount of raw water to be stored or supplied into the generation tank 1 is 20 L. In this case, the alkali concentration ratio at pH 13.0 is 3.16, and hence the amount of raw water to be stored or supplied into the generation tank 1 is $20/3.16=6.3291\approx6.3$ L (Table 1).

Similarly to the foregoing, the alkali concentration ratio at pH 13.1 is 3.98, and hence the amount of raw water to be stored or supplied into the generation tank 1 is $20/3.98=5.0251\approx5.0$ L (Table 1).

[Table 1]

| pH value | $[OH^-]$ (mol/L) | KOH concentration (%) | Alkali concentration ratio | Amount of raw water to be stored (supplied) into raw water tank (L) |
|---|---|---|---|---|
| pH 12.5 | 0.0316 | 0.1772 | 1 | 20.0 |
| pH 13.0 | 0.1000 | 0.5610 | 3.16 | 6.3 |

(continued)

| pH value | [OH⁻] (mol/L) | KOH concentration (%) | Alkali concentration ratio | Amount of raw water to be stored (supplied) into raw water tank (L) |
|---|---|---|---|---|
| pH 13.1 | 0.1259 | 0.7063 | 3.98 | 5.0 |

As shown in Table 1, it is understood that, when the reference raw water amount for generating electrolytic ion water having a reference pH value of 12.5 is 20 liters (L), it is appropriate that the raw water amount for generating electrolytic ion water having a pH value of 13.0 be 6.3 L, and the raw water amount for generating electrolytic ion water having a pH value of 13.1 be 5L.

Industrial Applicability

The electrolytic ion water generation method and the electrolytic ion water generation apparatus according to the present invention can suitably be used for generating electrolytic ion water, in particular, strong alkaline ion water having pH 12.5 or higher.

Reference Signs List

1 generation tank
1a raw water supply port
1b discharge port
1c take-in port
1d take-out port
2 electrolytic solution tank
2a electrolytic solution discharge port
2b electrolytic solution feedback port
3 stirring means
3a air pump
3b air supply pipe
4 electrolytic bath
5 cathode chamber
5a inlet port (of cathode chamber)
5b outlet port (of cathode chamber)
5x cathode plate
5y cathode terminal
6 anode chamber
6a inlet port (of anode chamber)
6b outlet port (of anode chamber)
6x anode plate
6y anode terminal
7 ion exchange membrane
8 DC power source
9 raw water amount control means
9a float switch in lower stage
9b float switch in upper stage
9v first main flow passage
9w first branch passage
9x second branch passage
9y first electromagnetic valve
9z second electromagnetic valve
10 spacer
11 partition plate
12 casing
13 charge port

14 receiving container
14a cup-shaped portion
14b locking portion
15 opening/closing lid
16 take-out passage
17 operation unit
A raw water supply source
P1 raw water circulation pump
P2 electrolytic solution circulation pump
Q1 electrolytic solution flow passage
Q2 electrolytic solution feedback flow passage
R1 raw water supply path
R2 raw water path
R3 feedback flow passage
R4 take-out flow passage

## Claims

1. An electrolytic ion water generation method, which involves use of a generation tank (1) configured to store raw water, an electrolytic solution tank (2) configured to store an electrolytic solution, an electrolytic bath (4) including a cathode chamber (5) and an anode chamber (6) partitioned by a cation exchange membrane (7), and a DC power source (8) configured to apply a voltage between electrode plates including a cathode plate provided in a vertical posture in the cathode chamber and an anode plate provided in a vertical posture in the anode chamber, to generate electrolytic ion water by supplying the raw water in the generation tank to the cathode chamber of the electrolytic bath connected to the generation tank, by supplying the electrolytic solution in the electrolytic solution tank to the anode chamber of the electrolytic bath connected to the electrolytic solution tank, and by applying a voltage between the electrode plates with use of the DC power source in a state in which the raw water is caused to enter the cathode chamber and the electrolytic solution is caused to enter the anode chamber to allow a cation generated in the anode chamber due to electrolysis to be reduced with raw water in the cathode chamber,
the electrolytic ion water generation method comprising:

charging potassium carbonate into a receiving container (14) separate from the electrolytic solution tank, which is arranged on an upper side of the electrolytic solution tank, the receiving container including a cup-shaped portion (14a) formed of a mesh member and configured to receive potassium carbonate, the receiving container being at a position where a bottom portion of the cup-shaped portion is soaked in an electrolytic solution in the electrolytic solution tank;
stirring the electrolytic solution containing the potassium carbonate in the electrolytic solution tank with stirring means (3) provided below the receiving container on a bottom surface side in the electrolytic solution tank;
causing the potassium carbonate in the receiving container to dissolve in the electrolytic solution in the electrolytic solution tank; and
subjecting the stirred electrolytic solution to electrolysis to allow a cation generated in the anode chamber due to the electrolysis to be reduced with raw water in the cathode chamber, thereby generating electrolytic ion water.

2. An electrolytic ion water generation apparatus, comprising:

a generation tank (1) configured to store raw water;
an electrolytic solution tank (2) configured to store an electrolytic solution;
an electrolytic bath (4) including a cathode chamber (5) and an anode chamber (6) partitioned by a cation exchange membrane (7); and
a DC power source (8) configured to apply a voltage between electrode plates including a cathode plate provided in a vertical posture in the cathode chamber and an anode plate provided in a vertical posture in the anode chamber,
the electrolytic ion water generation apparatus being configured to generate electrolytic ion water by supplying the raw water in the generation tank to the cathode chamber of the electrolytic bath connected to the generation tank, by supplying the electrolytic solution in the electrolytic solution tank to the anode chamber of the electrolytic bath connected to the electrolytic solution tank, and by applying a voltage between the electrode plates with use of the DC power source in a state in which the raw water is caused to enter the cathode chamber and the electrolytic solution is caused to enter the anode chamber to allow a cation generated in the anode chamber due to electrolysis to be reduced with raw water in the cathode chamber,

wherein the generation tank, the electrolytic solution tank, the electrolytic bath, and the DC power source are provided in a casing (12),

wherein the casing has a charge port (13) communicating with the electrolytic solution tank,

wherein a receiving container (14) separate from the electrolytic solution tank configured to receive the potassium carbonate is provided at the charge port,

wherein the receiving container includes a cup-shaped portion (14a) formed of a mesh member, which is configured to allow the electrolytic solution in the electrolytic solution tank to pass therethrough,

wherein the receiving container is provided on an upper side of the electrolytic solution tank and at a position where the receiving container is soaked in the electrolytic solution in the electrolytic solution tank so that a bottom portion of the cup-shaped portion is soaked in the electrolytic solution stored in the electrolytic solution tank, and

wherein stirring means (3) for stirring the electrolytic solution containing the potassium carbonate in the electrolytic solution tank is provided below the receiving container on a bottom surface side in the electrolytic solution tank.

3. The electrolytic ion water generation apparatus according to claim 2,

wherein the electrolytic bath (4) is provided outside of the generation tank (1) and the electrolytic solution tank (2),

wherein the cathode chamber (5) of the electrolytic bath and the generation tank are connected to each other by raw water circulating means for circulating the raw water in the generation tank between the generation tank and the cathode chamber, and

wherein the anode chamber (6) of the electrolytic bath and the electrolytic solution tank are connected to each other by electrolytic solution circulating means for circulating the electrolytic solution in the electrolytic solution tank between the electrolytic solution tank and the anode chamber.

4. The electrolytic ion water generation apparatus according to claim 2,

wherein the electrolytic solution tank (2) includes an opening portion, which is formed on a bottom side of the electrolytic solution tank to be open in a direction intersecting a vertical direction and is configured to connect the electrolytic solution tank to the electrolytic bath (4),

wherein the electrolytic bath is arranged on an outer side of the opening portion in such a manner that the anode chamber (6) is opposed to the opening portion,

wherein the electrolytic solution tank and the electrolytic bath, which is arranged on the outer side of the opening portion of the electrolytic solution tank, are connected to each other,

wherein the electrolytic bath and the electrolytic solution tank, which are connected to each other, are provided outside of the generation tank (1), and

wherein the cathode chamber of the electrolytic bath and the generation tank are connected to each other by raw water circulating means for circulating the raw water in the generation tank between the generation tank and the cathode chamber.

5. The electrolytic ion water generation apparatus according to claim 2,

wherein the electrolytic solution tank (2) includes an opening portion, which is formed on a bottom side of the electrolytic solution tank to be open in a direction intersecting a vertical direction and is configured to connect the electrolytic solution tank to the electrolytic bath (4),

wherein the electrolytic bath is arranged on an outer side of the opening portion in such a manner that the anode chamber is opposed to the opening portion,

wherein the electrolytic solution tank and the electrolytic bath, which is arranged on the outer side of the opening portion of the electrolytic solution tank, are connected to each other,

wherein the electrolytic bath and the electrolytic solution tank, which are connected to each other, are provided inside of the generation tank (1), and

wherein the raw water in the generation tank is caused to enter the cathode chamber of the electrolytic bath installed in the generation tank to come into contact with the cation exchange membrane (7) in the electrolytic bath.

**Patentansprüche**

1.  Verfahren zur Erzeugung von elektrolytischem Ionenwasser, das die Verwendung eines Erzeugungstanks (1), der so konfiguriert ist, dass er Rohwasser speichert, eines Elektrolytlösungstanks (2), der so konfiguriert ist, dass er eine Elektrolytlösung speichert, eines Elektrolytbads (4), das eine Kathodenkammer (5) und eine Anodenkammer (6) einschließt, die durch eine Kationenaustauschmembran (7) getrennt sind, und einer Gleichstromquelle (8), die so konfiguriert ist, dass sie eine Spannung zwischen Elektrodenplatten anlegt, einschließlich einer Kathodenplatte, die in einer vertikalen Stellung in der Kathodenkammer vorgesehen ist, und einer Anodenplatte, die in einer vertikalen Stellung in der Anodenkammer vorgesehen ist, zum Erzeugen von elektrolytischem Ionenwasser beinhaltet, indem das Rohwasser in dem Erzeugungstank der Kathodenkammer des mit dem Erzeugungstank verbundenen Elektrolytbads zugeführt wird, die Elektrolytlösung in dem Elektrolytlösungstank der Anodenkammer des mit dem Elektrolytlösungstank verbundenen Elektrolytbads zugeführt wird und eine Spannung zwischen den Elektrodenplatten unter Verwendung der Gleichstromquelle in einem Zustand angelegt wird, in dem das Rohwasser dazu veranlasst wird, in die Kathodenkammer einzutreten, und die Elektrolytlösung dazu veranlasst wird, in die Anodenkammer einzutreten, um zu ermöglichen, dass ein in der Anodenkammer aufgrund der Elektrolyse erzeugtes Kation mit Rohwasser in der Kathodenkammer reduziert wird,
    wobei das Verfahren zur Erzeugung von elektrolytischem Ionenwasser Folgendes umfasst:

    Einfüllen von Kaliumcarbonat in einen von dem Elektrolytlösungstank getrennten Aufnahmebehälter (14), der an einer Oberseite des Elektrolytlösungstanks angeordnet ist, wobei der Aufnahmebehälter einen becherförmigen Abschnitt (14a) einschließt, der aus einem Gitterelement gebildet und so konfiguriert ist, dass er Kaliumcarbonat aufnimmt, wobei sich der Aufnahmebehälter an einer Position befindet, an der ein unterer Abschnitt des becherförmigen Abschnitts in eine Elektrolytlösung in dem Elektrolytlösungstank eingetaucht wird;
    Rühren der das Kaliumcarbonat enthaltenden Elektrolytlösung im Elektrolytlösungstank mit einem Rührmittel (3), das unterhalb des Aufnahmebehälters auf einer unteren Oberflächenseite im Elektrolytlösungstank vorgesehen ist;
    Veranlassen, dass sich das Kaliumcarbonat in dem Aufnahmebehälter in der Elektrolytlösung in dem Elektrolytlösungstank auflöst; und
    Unterziehen der gerührten Elektrolytlösung einer Elektrolyse, um zu ermöglichen, dass ein in der Anodenkammer aufgrund der Elektrolyse erzeugtes Kation mit Rohwasser in der Kathodenkammer reduziert wird, wodurch elektrolytisches Ionenwasser erzeugt wird.

2.  Einrichtung zur Erzeugung von elektrolytischem Ionenwasser, die Folgendes umfasst:

    einen Erzeugungstank (1), der so konfiguriert ist, dass er Rohwasser speichert;
    einen Elektrolytlösungstank (2), der so konfiguriert ist, dass er eine Elektrolytlösung speichert;
    ein Elektrolytbad (4), das eine Kathodenkammer (5) und eine Anodenkammer (6) einschließt, die durch eine Kationenaustauschmembran (7) getrennt sind; und
    eine Gleichstromquelle (8), die konfiguriert ist, um eine Spannung zwischen Elektrodenplatten anzulegen, einschließlich einer Kathodenplatte, die in einer vertikalen Stellung in der Kathodenkammer vorgesehen ist, und einer Anodenplatte, die in einer vertikalen Stellung in der Anodenkammer vorgesehen ist,
    wobei die Einrichtung zur Erzeugung von elektrolytischem Ionenwasser konfiguriert ist, um elektrolytisches Ionenwasser zu erzeugen, indem sie das Rohwasser in dem Erzeugungstank der Kathodenkammer des mit dem Erzeugungstank verbundenen Elektrolytbads zuführt, die Elektrolytlösung in dem Elektrolytlösungstank der Anodenkammer des mit dem Elektrolytlösungstank verbundenen Elektrolytbads zuführt und eine Spannung zwischen den Elektrodenplatten unter Verwendung der Gleichstromquelle in einem Zustand anlegt, in dem das Rohwasser dazu veranlasst wird, in die Kathodenkammer einzutreten, und die Elektrolytlösung dazu veranlasst wird, in die Anodenkammer einzutreten, um zu ermöglichen, dass ein in der Anodenkammer aufgrund der Elektrolyse erzeugtes Kation mit Rohwasser in der Kathodenkammer reduziert wird,
    wobei der Erzeugungstank, der Elektrolytlösungstank, das Elektrolytbad und die Gleichstromquelle in einem Gehäuse (12) vorgesehen sind,
    wobei das Gehäuse einen Ladeanschluss (13) aufweist, die mit dem Elektrolytlösungstank in Verbindung steht,
    wobei ein vom Elektrolytlösungstank getrennter Aufnahmebehälter (14), der konfiguriert ist, um Kaliumcarbonat zu speichern, an dem Ladeanschluss vorgesehen ist,
    wobei der Aufnahmebehälter einen becherförmigen Abschnitt (14a) einschließt, der aus einem Gitterelement gebildet ist, das konfiguriert ist, um zu ermöglichen, dass die Elektrolytlösung im Elektrolytlösungstank hindurchfließen kann,
    wobei der Aufnahmebehälter an einer Oberseite des Elektrolytlösungstanks und an einer Position vorgesehen ist, an der der Aufnahmebehälter in die Elektrolytlösung in dem Elektrolytlösungstank eingetaucht wird, so dass ein unterer Abschnitt des becherförmigen Abschnitts in die in dem Elektrolytlösungstank gespeicherte Elektrolytlösung eingetaucht wird, und

wobei ein Rührmittel (3) zum Rühren der das Kaliumcarbonat enthaltenden Elektrolytlösung in dem Elektrolytlösungstank unterhalb des Aufnahmebehälters auf einer unteren Oberflächenseite in dem Elektrolytlösungstank vorgesehen ist.

3. Einrichtung zur Erzeugung von elektrolytischem Ionenwasser nach Anspruch 2,

wobei das Elektrolytbad (4) außerhalb des Erzeugungstanks (1) und des Elektrolytlösungstanks (2) vorgesehen ist,

wobei die Kathodenkammer (5) des Elektrolytbads und der Erzeugungstank durch ein Rohwasserzirkulationsmittel zum Zirkulieren des Rohwassers im Erzeugungstank zwischen dem Erzeugungstank und der Kathodenkammer miteinander verbunden sind, und

wobei die Anodenkammer (6) des Elektrolytbads und der Elektrolytlösungstank durch ein Elektrolytlösungszirkulationsmittel zum Zirkulieren der Elektrolytlösung im Elektrolytlösungstank zwischen dem Elektrolytlösungstank und der Anodenkammer miteinander verbunden sind.

4. Einrichtung zur Erzeugung von elektrolytischem Ionenwasser nach Anspruch 2,

wobei der Elektrolytlösungstank (2) einen Öffnungsabschnitt einschließt, der an einer Unterseite des Elektrolytlösungstanks so ausgebildet ist, dass er in einer Richtung, die eine vertikale Richtung schneidet, offen und so konfiguriert ist, dass er den Elektrolytlösungstank mit dem Elektrolytbad (4) verbindet,

wobei das Elektrolytbad an einer Außenseite des Öffnungsabschnitts so angeordnet ist, dass die Anodenkammer (6) dem Öffnungsabschnitt gegenüberliegt,

wobei der Elektrolytlösungstank und das Elektrolytbad, das an der Außenseite des Öffnungsabschnitts des Elektrolytlösungstanks angeordnet ist, miteinander verbunden sind,

wobei das Elektrolytbad und der Elektrolytlösungstank, die miteinander verbunden sind, außerhalb des Erzeugungstanks (1) vorgesehen sind, und

wobei die Kathodenkammer des Elektrolytbads und der Erzeugungstank durch ein Rohwasserzirkulationsmittel zum Zirkulieren des Rohwassers im Erzeugungstank zwischen dem Erzeugungstank und der Kathodenkammer miteinander verbunden sind.

5. Einrichtung zur Erzeugung von elektrolytischem Ionenwasser nach Anspruch 2,

wobei der Elektrolytlösungstank (2) einen Öffnungsabschnitt einschließt, der an einer Unterseite des Elektrolytlösungstanks so ausgebildet ist, dass er in einer Richtung, die eine vertikale Richtung schneidet, offen und so konfiguriert ist, dass er den Elektrolytlösungstank mit dem Elektrolytbad (4) verbindet,

wobei das Elektrolytbad an einer Außenseite des Öffnungsabschnitts so angeordnet ist, dass die Anodenkammer dem Öffnungsabschnitt gegenüberliegt,

wobei der Elektrolytlösungstank und das Elektrolytbad, das an der Außenseite des Öffnungsabschnitts des Elektrolytlösungstanks angeordnet ist, miteinander verbunden sind,

wobei das Elektrolytbad und der Elektrolytlösungstank, die miteinander verbunden sind, innerhalb des Erzeugungstanks (1) vorgesehen sind, und

wobei das Rohwasser im Erzeugungstank dazu veranlasst wird, in die Kathodenkammer des im Erzeugungstank installierten Elektrolytbads einzutreten, um mit der Kationenaustauschmembran (7) im Elektrolytbad in Kontakt zu kommen.

**Revendications**

1. Procédé de génération d'eau ionique électrolytique, qui implique l'utilisation d'un réservoir de génération (1) configuré pour stocker de l'eau brute, un réservoir de solution électrolytique (2) configuré pour stocker une solution électrolytique, un bain électrolytique (4) incluant une chambre de cathode (5) et une chambre d'anode (6) séparées par une membrane à échange de cations (7), et une source d'alimentation CC (8) configurée pour appliquer une tension entre des plaques d'électrodes incluant une plaque de cathode ménagée dans une position verticale dans la chambre de cathode et une plaque d'anode ménagée dans une position verticale dans la chambre d'anode, pour générer de l'eau ionique électrolytique en fournissant l'eau brute dans le réservoir de génération à la chambre de cathode du bain électrolytique raccordé au réservoir de génération, en fournissant la solution électrolytique dans le réservoir de solution électrolytique à la chambre d'anode du bain électrolytique raccordé au réservoir de la solution électrolytique, et en appliquant une tension entre les plaques d'électrodes en utilisant la source d'alimentation CC dans un état où l'eau brute est amenée à entrer dans la chambre de cathode et la solution électrolytique est amenée à entrer dans la chambre d'anode pour permettre à un cation généré dans la chambre d'anode du fait de l'électrolyse d'être réduit avec de l'eau brute dans la chambre de cathode,

le procédé de génération d'eau ionique électrolytique comprenant les étapes consistant à :

charger du carbonate de potassium dans un récipient de réception (14) séparé du réservoir de solution électrolytique, qui est agencé sur un côté supérieur du réservoir de solution électrolytique, le récipient de réception incluant une partie en forme de tasse (14a) formée d'un élément en maille et configurée pour recevoir du carbonate de potassium, le réservoir de réception étant au niveau d'une position où une partie inférieure de la partie en forme de tasse est immergée dans une solution électrolytique dans le réservoir de solution électrolytique ;

agiter la solution électrolytique contenant le carbonate de potassium dans le réservoir de solution électrolytique avec un moyen d'agitation (3) ménagé sous le réservoir de réception sur un côté de surface inférieure dans le réservoir de solution électrolytique ;

amener le carbonate de potassium dans le réservoir de réception à se dissoudre dans la solution électrolytique dans le réservoir de solution électrolytique ; et

soumettre la solution électrolytique agitée à une électrolyse pour permettre la réduction d'un cation généré dans la chambre d'anode, du fait de l'électrolyse avec de l'eau brute dans la chambre de cathode, générant ainsi de l'eau ionique électrolytique.

2. Appareil de génération d'eau ionique électrolytique comprenant :

un réservoir de génération (1) configuré pour stocker de l'eau brute ;

un réservoir de solution électrolytique (2) configuré pour stocker une solution électrolytique ;

un bain électrolytique (4) incluant une chambre de cathode (5) et une chambre d'anode (6) séparées par une membrane à échange de cations (7) ; et

une source d'alimentation CC (8) configurée pour appliquer une tension entre des plaques d'électrodes incluant une plaque de cathode ménagée dans une position verticale dans la chambre de cathode et une plaque d'anode ménagée dans une position verticale dans la chambre d'anode,

l'appareil de génération d'eau ionique électrolytique étant configuré pour générer de l'eau ionique électrolytique en fournissant l'eau brute dans le réservoir de génération à la chambre de cathode du bain électrolytique raccordé au réservoir de génération, en fournissant la solution électrolytique dans le réservoir de solution électrolytique à la chambre d'anode du bain électrolytique raccordé au réservoir de solution électrolytique, et en appliquant une tension entre les plaques d'électrode en utilisant la source d'alimentation CC dans un état dans lequel l'eau brute est amenée à entrer dans la chambre de cathode et la solution électrolytique est amenée à entrer dans la chambre d'anode pour permettre à un cation généré dans la chambre d'anode, du fait de l'électrolyse, d'être réduit avec de l'eau brute dans la chambre de cathode,

dans lequel le réservoir de génération, le réservoir de solution électrolytique, le bain électrolytique et la source d'alimentation CC sont ménagés dans un boîtier (12),

dans lequel le boîtier présente un orifice de charge (13) communiquant avec le réservoir de solution électrolytique,

dans lequel un récipient de réception (14) séparé du réservoir de solution électrolytique configuré pour recevoir le carbonate de potassium est ménagé au niveau de l'orifice de charge,

dans lequel le récipient de réception inclut une partie en forme de tasse (14a) constituée d'un élément maillé, qui est configuré pour permettre à la solution électrolytique dans le réservoir de solution électrolytique de passer à travers lui-même,

dans lequel le récipient de réception est ménagé sur un côté supérieur du réservoir de solution électrolytique et au niveau d'une position où le récipient de réception est immergé dans la solution électrolytique dans le réservoir de solution électrolytique de sorte qu'une partie inférieure de la partie en forme de tasse soit immergée dans la solution électrolytique stockée dans le réservoir de solution électrolytique, et

dans lequel un moyen d'agitation (3) pour agiter la solution électrolytique contenant le carbonate de potassium dans le réservoir de solution électrolytique est ménagé sous le récipient de réception sur un côté de surface inférieure dans le réservoir de solution électrolytique.

3. Appareil de génération d'eau ionique électrolytique selon la revendication 2,

dans lequel le bain électrolytique (4) est ménagé hors du réservoir de génération (1) et du réservoir de solution électrolytique (2),

dans lequel la chambre de cathode (5) du bain électrolytique et le réservoir de génération sont raccordés l'un à l'autre par un moyen de circulation d'eau brute pour faire circuler l'eau brute dans le réservoir de génération entre le réservoir de génération et la chambre de cathode, et

dans lequel la chambre d'anode (6) du bain électrolytique et le réservoir de solution électrolytique sont raccordés l'un à l'autre par un moyen de circulation de la solution électrolytique pour faire circuler la solution électrolytique dans le réservoir de solution électrolytique entre le réservoir de solution électrolytique et la chambre d'anode.

4. Appareil de génération d'eau ionique électrolytique selon la revendication 2,

dans lequel le réservoir de solution électrolytique (2) inclut une partie d'ouverture, qui est formée sur un côté inférieur du réservoir de solution électrolytique de façon à s'ouvrir dans une direction coupant une direction verticale et est configurée pour raccorder le réservoir de solution électrolytique au bain électrolytique (4),

dans lequel le bain électrolytique est agencé sur un côté extérieur de la partie d'ouverture de sorte que la chambre d'anode (6) soit opposée à la partie d'ouverture,

dans lequel le réservoir de solution et le bain électrolytique, qui est agencé sur le côté extérieur de la partie d'ouverture du réservoir de solution électrolytique, sont raccordés l'un à l'autre,

dans lequel le bain électrolytique et le réservoir de solution électrolytique, qui sont raccordés l'un à l'autre, sont ménagés en dehors du réservoir de génération (1), et

dans lequel la chambre de cathode du bain électrolytique et le réservoir de génération sont raccordés l'un à l'autre par un moyen de circulation d'eau brute pour faire circuler l'eau brute dans le réservoir de génération entre le réservoir de génération et la chambre de cathode.

5. Appareil de génération d'eau ionique électrolytique selon la revendication 2,

dans lequel le réservoir de solution électrolytique (2) inclut une partie d'ouverture, qui est formée sur un côté inférieur du réservoir de solution électrolytique pour être ouverte dans une direction coupant une direction verticale et est configuré pour raccorder le réservoir de solution électrolytique au bain électrolytique (4),

dans lequel le bain électrolytique est agencé sur un côté extérieur de la partie d'ouverture de sorte que la chambre d'anode est opposée à la partie d'ouverture,

dans lequel le réservoir de solution électrolytique et le bain électrolytique, qui est agencé sur le côté extérieur de la partie d'ouverture du réservoir de solution électrolytique, sont raccordés l'un à l'autre,

dans lequel le bain électrolytique et le réservoir de solution électrolytique, qui sont raccordés l'un à l'autre, sont ménagés à l'intérieur du réservoir de génération (1), et

dans lequel l'eau brute dans le réservoir de génération d'eau brute est amenée à entrer dans la chambre de cathode du bain électrolytique installé dans le réservoir de génération pour entrer en contact avec la membrane à échange de cations (7) dans le bain électrolytique.

FIG. 1

FIG. 2

FIG. 3

FIG. 4

FIG. 5(a)

FIG. 5(b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012040489 A
- WO 2016016954 A
- KR 20030077910
- US 2017247267 A1
- JP 4115886 B